(19) Europäisches Patentamt
European Patent Office
Office européen des brevets

(11) Veröffentlichungsnummer: **0 265 743**
**B1**

(12) # EUROPÄISCHE PATENTSCHRIFT

(45) Veröffentlichungstag der Patentschrift: **31.01.90**

(51) Int. Cl.⁴: **B01J 13/02,** B41M 5/00

(21) Anmeldenummer: **87114776.5**

(22) Anmeldetag: **09.10.87**

(54) **Mikrokapseln mit verbesserten Wänden.**

(30) Priorität: **22.10.86 DE 3635821**

(43) Veröffentlichungstag der Anmeldung:
**04.05.88 Patentblatt 88/18**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**US-A- 4 360 376**

**CHEMICAL ABSTRACTS, Band 80, Nr. 2, 14. Januar 1974, Seite 56, Zusammenfassung Nr.4507y, Columbus, Ohio, US; & JP-A-72 43 740 (PILOT PEN CO., LTD) 06-11-1972**

(73) Patentinhaber: **BAYER AG,**
**D-5090 Leverkusen 1 Bayerwerk(DE)**

(72) Erfinder: **Jabs, Gert, Dr., Wingensiefer Kamp 25,**
**D-5068 Odenthal(DE)**
Erfinder: **Nehen, Ulrich, Dr., Rückertstrasse 10,**
**D-5090 Leverkusen 1(DE)**
Erfinder: **Scholl, Hans Joachim, Dr., Am Feldrain 5,**
**D-5000 Köln 80(DE)**

**EP 0 265 743 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Verfahren zur Herstellung von Mikrokapseln durch Grenzflächenpolyaddition zwischen Polyisocyanaten und Polyaminen sind bekannt und beispielsweise beschrieben in den Deutschen Offenlegungsschriften 2 109 335; 2 251 381; 2 242 910; 2 120 921; 2 311 712 und 2 523 586.

In der dispersen Phase lassen sich derart sowohl Isocyanate verwenden, die löslich sind als auch solche, die mit der organischen Flüssigkeit eine Emulsion ergeben.

Die bisher beschriebenen Verfahren haben jedoch noch einige Nachteile:

Zur Einstellung der Teilchengröße werden der wäßrigen Phase vor der Herstellung der Emulsion Dispergier- und Emulgierhilfsmittel zugesetzt. Die Auswahl an geeigneten oberflächenaktiven Verbindungen für eine Grenzflächenpolyaddition ist jedoch sehr stark eingeschränkt, da die Emulgatormoleküle gerade die Grenzfläche belegen. Hierdurch komm es häufig zu einer Störung der Grenzflächenreaktion. Insbesondere gegenüber dem Kernmaterial diffusionsdichte Kapselwände können in der Regel nur ohne Zusatz eines Emulgierhilfsmittels erzielt werden. Verzichtet man jedoch auf ein Emulgierhilfsmittel, so müssen erheblich höhere Scherkräfte bei der Emulgierung angewandt werden.

Ein weiterer Nachteil ist die geringe Löslichkeit der bisher verwendeten Isocyanate in der organischen Phase. Insbesondere bei der Herstellung von Mikrokapseln zur Herstellung kohlefreier Durchschreibesysteme wäre es wünschenswert, den Anteil an Verschnittmitteln wie Isoparaffinen zu erhöhen, sowie Alkylbenzole einzusetzen und damit den bei den übrigen Gelatine- oder Melamin-Formaldehydkapseln bereits erreichten Stand der Technik auch mit Mikrokapseln aus Grenzflächenrektionen einzustellen.

Aus der DE-A-34 21 865 sind zwar Verfahrensvarianten bekanntgeworden, bei denen unter bestimmten Bedingungen mit im Kernmaterial nicht löslichen Isocyanaten gearbeitet werden kann, eine diskontinuierliche Herstellung der Mikrokapseln ist jedoch nach dieser Methode nicht möglich.

Der Erfindung lag die Aufgabe zugrunde, verbesserte Mikrokapseln zur Verfügung zu stellen, Gegenstand der Erfindung sind Mikrokapseln aus wenigstens einem Kernmaterial und wenigstens einer Wand, welche das Reaktionsprodukt wenigstens eines Isocyanates mit wenigstens einer isocyanatreaktiven Gruppe mit aktivem H-Atom enthält. Erfindungsgemäß ist das Isocyanat ein aromatisches Isocyanat mit wenigstens zwei Isocyanatgruppen, welches zusätzlich eine Alkyl- oder Alkoxygruppe mit mindestens 6 C-Atomen aufweist.

In einer bevorzugten Ausführungsform entspricht das Isocyanat folgender Formel (I)

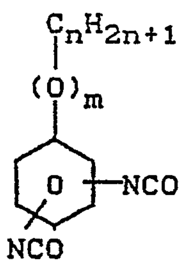

(I)

worin bedeuten

n 6 bis 20,

m 0 oder 1

und wobei der aromatische Ring unsubstituiert ist.

In einer besonders bevorzugten Ausführungsform entspricht das Isocyanat einer der folgenden Formeln (II) und (III)

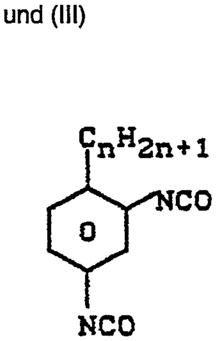

(II)

n = 6 - 18

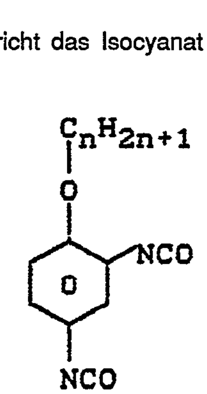

(III)

n = 8 - 20

Ein weiterer Gegenstand der Erfindung sind weiterhin Reaktionsdurchschreibepapiere mit den erfindungsgemäßen Mikrokapseln.

Die Herstellung der erfindungsgemäß zu verwendenden Alkylbenzoldiisocyanate ist z.B. beschrieben in der DE-A-3 105 776 und der EP-A-58368. Die Alkoxybenzoldiisocyanate können beispielsweise hergestellt werden durch das in der Deutschen Patentanmeldung 3 52l 126 angegebene Verfahren.

Die Isocyanate können auch in teilweise modifizierter Form eingesetzt werden, d.h. beispielsweise in Form ihrer Biuret-, Isocyanurat-, Uretdion-Oligomeren oder als Prepolymere.

Besonders geeignete isocyanatreaktive Verbindungen mit aktiven H-Atom sind:

1. Amine, vorzugsweise aliphatische, primäre oder sekundäre Di- und Polyamine, z.B.: Ethylendiamin-(1,2), Bis(3-aminopropyl)amin, Hydrazinethanol-(2), Bis(2-methylaminoethyl)methylamin, 1,4-Diaminocyclohexan, 3-Amino-1-methyl-aminopropan, N-Hydroxyethyl-ethylendiamin, N-Methyl-bis(3-aminopropyl)amin, 1,4-Diamino-n-butan, 1,6-Diamino-n-hexan, Ethylen-(1,2)-diamin-N-ethyl-sulfonsäure (als Alkalisalz), 1-Aminoethylendiamin-(1,2), Bis (N,N'-aminoethyl)ethylendiamin-(1,2).

Hydrazin und seine Salze werden im vorliegenden Zusammenhang ebenfalls wie Amin angesprochen. Bevorzugte Amine (Vernetzer) in Sinne der Erfindung sind Diethylentriamin, Hexamethylendiamin, Hydrazinhydrat, 4,4'-Diphenylmethandiamin, Triethanolamin und/oder Mischungen daraus.

Bevorzugt können mindestens trifunktionelle Amine mit wenigstens 3 primären Amingruppen eingesetzt werden. Als Beispiel dieser Verbindungen sei 1,6,11-Triaminoundecan erwähnt.

Die Amine lassen sich durch Kondensation cyclischer Lactame und anschließender Aminolyse und Hydrierung gewinnen, s. auch Angew. Chemie 72 [1960], S. 1002.

2. Alkohole, insbesondere Polyether, welcher OH-Gruppen und Aminogruppen enthält (Polyetherpolyole), Vorzugsweise handelt es sich bei den Aminogruppen um Gruppen mit tertiärem Stickstoff.

In einer anderen bevorzugten Ausführungsform beträgt das Molekulargewicht des Polyetherpolyols 100 bis 3000m vorzugsweise 300 bis 1500.

In einer weiteren bevorzugten Ausführungsform ist der Polyetherpolyol das Umsetzungsprodukt eines Epoxides mit Stickstoff und/oder einem Diamin und/oder einem Alkonolamin, insbesondere Ethanolamin, wobei Ethylenoxid und Propylenoxid besonders bevorzugte Epoxide sind.

3. Möglich ist ferner der Einsatz von PU-Katalysatoren anstelle der Vernetzer. In diesem Falle erfolgt eine Polykondensation, ausgelöst durch Reaktion des Isocyanats mit Wasser.

Zusätzlich zu den erfindungsgemäß zu verwendenden Isocyanaten können weitere Isocyanate verwendet werden. In derartigen Abmischungen bestehen vorzugsweise mindestens 10 Gew.-%, insbesondere mindestens 30 Gew.-% der Gesamtmenge an Isocyanaten aus den erfindungsgemäß zu verwendenden Isocyanaten. Bevorzugte zusätzliche Isocyanate sind z.B. aliphatische, cycloaliphatische, araliphatische, aromatische und heterocyclische Polyisocyanate, wie sie z.B. von W. Siefken in Justus Liebigs Annalen der Chemie, 562, Seiten 75-136, beschrieben werden, beispielsweise Ethylen-Diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, sowie beliebige Gemische dieser Isomeren, 1-Iso-cyanato-3,3,5-trimethyl-5-isocyanatomethyl-cyclohexan (DAS 1 202 785, US-Patentschrift 3 401 190), 2,4- und 2,6-Hexahydrotoluylendiisocyanat, sowie beliebige Gemische dieser Isomeren, Hexahydro-1,3-und/oder -1,4-phenylendiisocyanat, Perhydro-2,4' -und/oder -4,4'-diphenylmethandiisocyanat, 1,3-und 1,4-Phenylendiisocyanat, 2,4- und 2,6-Toluylendiisocyanat. sowie beliebige Gemische dieser Isomeren, Diphenylmethan-2,4' - und/oder -4,4'-diisocyanat, Naphthylen-1,5-diisocyanat, Triphenylmethan-4,4', 4"-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, m- und p-Isocyanatophenyl-sulfonyl-isocyanate gemäß der US-Patentschrift 3 454 606, perchlorierte Arylpolyisocyanate, wie sie z.B. in der deutschen Auslegeschrift 1 157 601 (US-Patentschrift 3 277 138) beschrieben werden, Carbodiimidgruppen aufweisende Polyisocyanate, wie sie in der deutschen Patentschrift 1 092 007 (US-Patentschrift 3 152 162) beschrieben werden, Diisocyanate, wie sie in der US-Patentschrift 3 492 330 beschrieben werden, Allophanatgruppen aufweisende Polyisocyanate, wie sie z.B. in der britischen Patenschrift 761 626 und der veröffentlichten holländischen Patentanmeldung 7 102 524 beschrieben werden. Isocyanuratgruppen aufweisende Polyisocyanate, wie sie z.B. in der US-Patentschrift 3 001 973, in den deutschen Patentschriften 1 022 789, 1 222 067 und 1 027 394, sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der US-Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394 (US-Patentschriften 3 124 605 und 3 201 372) sowie in der britischen Patentschrift 889 050 beschrieben werden, durch Telomerisationsreaktionen hergestellte Polyisocyanate, wie sie z.B. in der US-Patentschrift 3 654 106, beschrieben werden Ethergruppen aufweisende Polyisocyanate, wie sie z.B. in den britischen Patentschriften 965 474 und 1 072 956, in der US-Patentschrift 3 567 763 und in der deutschen Patentschrift 1 231 688 genannt werden, Umsetzungsprodukte der oben genannten Isocyanate mit Acetalen gemäß der deutschen Patentschrift 1 072 385, polymere Fettsäurereste enthaltende Polyisocyanate gemäß der US-Patentschrift 3 455 883.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Geeignete modifizierte, aliphatische Isocyanate sind solche auf Basis von Hexamethylen-1,6-diisocyanat, m-Xylylendiisocyanat, 4,4'-Diisocyanat-dicyclohexylmethan bzw. Isophorondiisocyanat, die pro Molekül mindestens zwei funktionelle Isocyanatgruppen aufweisen.

Ferner geeignet sind Polyisocyanate auf Basis von Derivaten des Hexamethylen-1,6-diisocyanats mit Biuretstruktur gemäß DE-AS 1 101 394, DE-AS 1 543 178, DE-OS 1 568 017, DE-OS 1 931 055.

Außerdem einsetzbar sind Polyisocyanato-polyuretonimine, wie sie durch Carbodiimidisierung von Biuretgruppen enthaltendem Hexamethylen-1,6-diisocyanat mit phosphororganischen Katalysatoren entstehen, durch weitere Umsetzung primär gebildeter Carbodiimidgruppen mit Isocyanatgruppen zu Uretonimingruppen.

Es können auch Isocyanurat-modifizierte Polyisocyanate mit mehr als zwei endständigen Isocyanatgruppen verwendet werden. Speziell ist in der DE-OS 2 839 133 die Herstellung Isocyanurat-modifizierter Polyisocyanate auf Basis von Hexamethylendiisocyanat beschrieben. Die übrigen können analog erhalten werden.

Geeignet sind ferner die Isocyanate der Formel (IV)

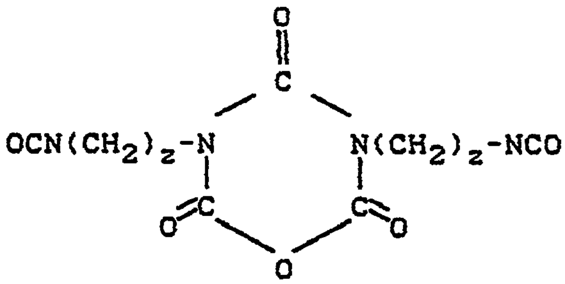

(IV)

$z = 3-6$

Es können auch Gemische aus den genannten modifizierten aliphatischen und den genannten aromatischen Isocyanaten insbesondere Diphenylmethandiisocyanaten, die gegebenenfalls modifiziert sein können, verwendet werden.

Bevorzugte Isocyanate sind biuretisches Hexamethylendiisocyanat in Abmischung mit 4,4'-Diphenylmethandiisocyanat, gegebenenfalls mit 2,4-Anteil, trimerisiertes Hexamethylendiisocyanat in Abmischung mit 4,4'-Diphenylmethandiisocyanat, gegebenenfalls mit 2,4-Anteil und/oder Isocyanate der Formel (IV) (Oxidiazintrion des HDI).

Als Kernmaterial zur Einkapselung mit den erfindungsgemäßen Isocyanaten sind alle mit Wasser wenig mischbaren, hydrophoben Flüssigkeiten geeignet, beispielsweise aliphatische und aromatische Kohlenwasserstoffe, Halogenkohlenwasserstoffe, Ether, Ester etc., geeignet, die keine mit Isocyanat reagierende Gruppe enthalten.

Die Kernmaterialien können auch Feststoffe, beispielweise Wirkstoffe, Pharmazeutika, Pestizide, Herbizide etc., gelöst enthalten. Im Falle der Verwendung der Kapseln für kohlefreie Durchschreibepapiere besteht das Kernmaterial aus Lösungen von Farbstoffvorläufern.

Beispiele für Farbstoffvorläufer sind Triphenylmethanverbindungen, Diphenylmethanverbindungen, Xanthenverbindungen, Thiazinverbin dungen, Spiropyranverbindungen.

Insbesondere sind geeignet: Triphenylmethanverbindungen: 3,3-Bis-(p-dimethylaminophenyl)-6-dimethylaminophthalid ("Kristallviolettlacton", nachstehend als "C.V.L." bezeichnet) und 3,3-Bis-(p-dimethylaminophenyl)-phthalid ("Malachitgrünlacton"), Diphenylmethanverbindungen: 4,4'-Bis-dimethylaminobenzhydrylbenzylether, N-Halogenphenylleucauramin, N-β-Naphthylleucauramin, N-2,4,5-Trichlorpheynlleucauramin, N-2,4-Dichlorphenylleucauramin; Xanthenverbindungen: Rhodamin-β-anilinolactam, Rhodamin-β-(p-nitroanilin)-lactam, Rhodamin-β-(p-chloranilin)-lactam, 7-Dimethyl-amin-2-methoxy-fluoran, 7-Diethyl-amin-3-methoxyfluoran, 7-Diethylamin-3-methylfluoran, 7-Diethylamin-3-chlorfluoran, 7-Diethylamin-3-chlor-2-methylfluoran, 7-Diethylamin-2,4-dimethylfluoran, 7-Diethylamin-2,3-dimethylfluoran, 7-Diethylamin-(3-acetylmethylamin)-fluoran, 7-Diethyl-amin-3-methylfluoran, 3,7-Diethylaminfluoran, 7-Diethylamino-3-(dibenzylamin)-fluoran, 7-Diethylamin-3-(methylbenzylamin)-fluoran, 7-Diethylamin-3-(chlorethylmethylamino)-fluoran, 7-Diethylamin-3-(dichlorethylamin)-fluoran, 7-Diethylamin-3- (diethylamin)-fluoran; Thiazinverbindungen: N-Benzoylleucomethylenblau, o-Chlorbenzoylleucomethylenblau, p-Nitrobenzoylleucomethylenblau; Spiroverbindungen: 3-Methyl-2,2'-spiro-bis-(benzo(f)-chromen).

Lösungsmittel, die diese Farbstoffvorläufer lösen, sind z.B. chloriertes Diphenyl, chloriertes Paraffin, Baumwollsamenöl, Erdnußöl, Siliconöl, Trikresylphosphat, Monochlorbenzol, ferner teilhydrierte Terphenyle, alkylierte Diphenyle, alkylierte Napthaline, Arylether, Arylakylether, höher alkyliertes Benzol und andere sowie Mischunggen derer.

Häufig wereden den Lösungsmitteln Verdünnungsmittel zugesetz, wie beispielsweise Kerosin, n-Paraffine, Isoparaffine.

Zur Herstellung der Mikrokapseln nach dem Polyadditionsverfahren wird das Isocyanat in den genannten hydrophoben Kernmaterialien gelöst und diese organische Phase in der kontinuierlichen wäßrigen Phase, die Schutzkolloid und gegenbenenfalls Emulgatoren enthalten kann, emulgiert, Zur Emulsion gibt man eine wäßrige Polyaminlösung in stöchiometrischer Menge zum aromatischen Isocyanat in der organischen Phase.

Zur Stabilisierung der gebildeten Emulsion werden der wäßrigen Phase Schutzkolloide zugesetzt. Beispiele für solche als Schutzkolloide wirkende Produkte sind Carboxymethylcellulose, Gelatine und Polyvinylalkohol.

Die Mikrokapseln können diskontinuierlich hergestellt werden. Man verwendet im allgemeinen Dispergiergeräte, die ein Schergefälle erzeugen. Beispiele hierfür sind Blatt-, Korb-, Schnellrührer, Kolloidmühlen, Homogenisatoren, Ultraschalldispergatoren, Düsen, Stahldüsen, Supratonmaschinen. Die Stärke der Turbulenz beim Vermischen ist in erster Linie bestimmend für den Druchmesser der erhaltenen Mikrokapseln. Kapseln in der Größe von 1 bis 2000 µm können hergestellt werden. Bevorzugt sind Kapseln mit Durchmessern von 2 bis 20µm.

Die hochkonzentrierten Suspensionen können nach einer kurzen weiteren Nachbehandlung direkt für den jeweils vorgesehenen Einsatzzweck verwendet werden.

Die Suspensionen lassen sich beispielsweise durch Sprühtrocknung in agglomeratfreie Kapselpulver überführen. Die Sprühtrocknung ist bei derartig konzentrierten Suspensionen besonders rationell, da die zu verdampfende Menge Wasser vergleichsweise gering ist.

Die Farbstoffvorläufer enthaltenden Mikrokapseldispersionen können beispielsweise zur Herstellung kohlefreier Durchschreibepapiere verwendet werden.

Hierzu werden die erfindungsgemäßen Suspensionen mit Bindemitteln und Abstandshaltern versehen und auf eine Papierträgerbahn aufgestrichen. Die Formulierung derartiger Streichfarben ist längst bekannter Stand der Technik.

Es ist auch möglich, die erfindungsgemäßen Suspensionen aufgrund des hohen Kapselgehaltes direkt, ohne aufwendige Aufkonzentrierung, zur Herstellung wäßriger F lexodruckpasten zu verwenden. Die Herstellung kapselhaltiger Flexodruckpasten und die Herstellung von vollflächig oder partiell beschichteter Durchschreibepapiere ist bereits bekannt. Der Vorteil beim Einsatz der erfindungsgemäßen Suspensionen besteht darin, daß bislang notwendige Aufkonzentrierungen entfallen können.

Als Reaktionspartner für die Farbstoffvorläufer in den Mikrokapseln können an sich bekannte Farbentwickler eingesetzt werden, wie beispielsweise saure Tone, Montmorillonit, Bentonite und Smectite oder sythetische Phenolharze.

Die Geberkomponente ist im allgmeinen bei Durchschreibesätzen die Rückseite des Oberblattes. Die Vorderseite des nächsten Blattes ist mit der Farbenwicklerkomponente beschichtet. Man bezeichnet diese Schicht als Nehmerkomponente. Bei Durchschreibesätzen ist die Nehmerkomponente die Oberseite des zweiten Papierblattes. Bei Mehrfachdurchschreibesätzen müssen die folgenden Geberblätter auf der Gegenseite eine Nehmerbeschichtung tragen. Die Herstellung solcher Nehmerschichten ist bekannt und ebenfalls in den deutschen Offenlegungsschriften 1 934 457 und 1 955 542 beschrieben.

Weitere Einzelheiten zur Durchführung des erfindungsgemäßen Verfahrens sind den nachfolgenden Beispielen zu entnehmen.

<u>Vergleichsbeispiel</u>

In 167 Teilen Dodecylbenzol wurden 8,8 Teile eines Fluoranfarbgebers (Pergascript Schwarz IBR der Fa. Ciba-Geigy AG) unter Erwärmen gelöst. Anschließend erfolgte die Zugabe von 24 Teilen biuretisiertem Hexamethylendiisocyanat. Die entstandene Mischung war trübe und inhomogen, stellte also keine Lösung dar.

Die erhaltene Mischung (Emulsion) wurde mit 250 Teilen einer 0,5 %igen wäßrigen Lösung eines zu 90 % verseiften Polyvinylacetats gemischt und in einem Rotor-/Statoremulgiergerät eine Emulsion mit einer Tröpfchengröße von 6 µm hergestellt.

Anschließend erfolgte die Zugabe von 5,1 Teilen Diethylentriamin in 45 Teilen Wasser.

Die Dispersion wurde 3 Stunden bei 60°C nachbehandelt und so eine 40 %ige Kapseldispersion hergestellt.

Beim Auftrag dieser Kapselemulsion auf die Entwicklerseite eines handelsüblichen CF-Papiers (3 g/m² Kapselauftrag) und Trocknen ergab sich spontan eine Grauverfärbung, ein Zeichen, daß teilweise für die Farbgeberlösung durchlässige Kapselwände gebildet wurde.

Im Mikroskop sind eindeutig kugelförmige Mikrokapseln zu erkennen.

<u>Beispiel 1</u>

In 167 Teilen Dodecylbenzol werden 8,8 Teile eines Fluoranfarbgebers (Pergascript Schwarz IBR der Fa. Ciba-Geigy AG) unter Erwärmen gelöst. Anschließend erfolgte die Zugabe von 24 Teilen Dodecylbenzoldiisocyanat. Die erhaltene Lösung wird mit 250 Teilen einer 0,5 %igen, wäßrigen Lösung eines 90

% verseiften Polyvinylacetats gemischt und in einem Rotor-/Statoremulgiergerät zu einer Emulsion mit einer Tröpfchengröße von 6 µm emulgiert.

Anschließend erfolgte die Zugabe von 5,1 Teilen Diethylentriamin in 45 Teilen Wasser.

Die gebildete 40 %ige Kapseldispersion wurde 3 Stunden bei 60° C nachbehandelt.

Beim Auftrag der verdünnten Kapseldispersion auf die Entwicklerschicht eines CF-Papiers (3 g/m² Kapselauftrag) und Trocknen ergab sich kein Verfärbung. Erst bei Anwendung von Druck zerbrachen die Kapseln und zeigten eine Verfärbung.

Beispiel 2

Es wurde wie in Beispiel 1 verfahren, nur mit dem Unterschied, daß eine Mischung von 20 Teilen biuretisiertem Hexamethylendiisocyanates mit einem Isocyanatgehalt von 21 % und 4 Teilen Dodecylbenzoldiisocyanat anstelle des reinen Dodecylbenzoldiisocyanats eingesetzt wurde.

Bei Überprüfung der Kapseldichtigkeit wie in Beispiel 1 beschrieben, ergab sich ebenfalls erst eine Verfärbung des Papieres bei Anwendung eines (Schreib-)Druckes.

**Patentansprüche**

1. Mikrokapseln aus wenigstens einem Kernmaterial und wenigstens einer Wand, welche das Reaktionsprodukt wenigstens eines Isocyanates mit wenigstens einer isocyanatreaktiven Gruppe mit aktivem H-Atom enthält, dadurch gekennzeichnet, daß das Isocyanat ein aromatisches Isocyanat mit wenigstens zwei Isocyanatgruppen ist, welches zusätzlich eine Alkyl- oderAlkoxygruppe mit mindestens 6 C-Atomen aufweist.

2. Mikrokapseln nach Anspruch 1, dadurch gekennzeichnet, daß das Isocyanat folgender Formel (I) entspricht

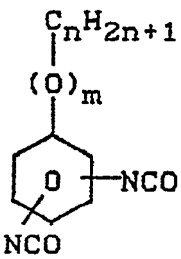 (I)

worin bedeutet

n 6 bis 20,

m 0 oder 1

und wobei der aromatische Ring unsubstituiert ist.

3. Mikrokapseln nach Anspruch 1, daduch gekennzeichnet, daß das Isocyanat einer der folgenden Formeln (II) oder (III) entspricht

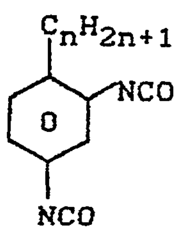 (II)

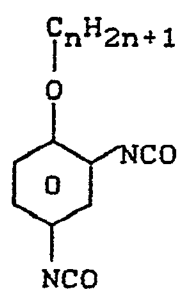 (III)

n = 6 - 18 n = 8 - 20

4. Mikrokapseln nach Anspruch 1, dadurch gekennzeichnet, daß die isocyanatreaktive Gruppe mit einem aktiven H-Atom ein Amin oder Alkohol ist.

5. Mikrokapseln nach Anspruch 1, dadurch gekennzeichnet, daß als Kernmaterial ein Farbstoffvorläufer enthalten ist.

6. Reaktionsdurchschreibepapier enthaltend Mikrokapseln nach Anspruch 1.

7. Verfahren zur Herstellung von Mikrokapseln, dadurch gekennzeichnet, daß man ein aromatisches Isocyanat mit wenigstens zwei Isocyanatgruppen, welches zusätzlich eine Alkyl- oder Alkoxygruppe mit

mindestens 6 C-Atomen aufweist, in einer mit Wasser wenig mischbaren hydrophoben Flüssigkeit löst, diese organische Phase in einer kontinuierlichen wäßrigen Phase emulgiert, die ein Schutzkolloid und gegebenenfalls einen Emulgator enthält, und dieser Emulsion eine wäßrige Polyaminlösung in stöchiometrischer Menge zum aromatischen Isocyanat zufügt.

8. Verfahren nach Anspruch 7, dadurch gekennzeichnet, daß es sich bei dem aromatischen Isocyanat um eines der Formel (I) handelt

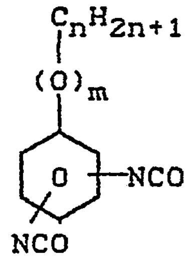

(I),

worin bedeuten

n 6 bis 20,

m 0 oder 1

und wobei der aromatische Ring unsubstituiert ist,

bei der hydrophoben Flüssigkeit um einen aliphatischen oder aromatischen Kohlenwasserstoff, Ether, Ester oder einen Farbstoffvorläufer aus der Gruppe der Triphenylmethanverbindungen, der Diphenylmethanverbindungen, der Xanthenverbindungen, der Thiazinverbindungen und der Spiropyranverbindungen, bei dem Schutzkolloid um Carboxymethylcellulose, Gelatine oder Polyvinylalkohol und bei dem Polyamin um ein aliphatisches, primäres oder sekundäres Di- oder Polyamin, Hydrazin, Salz des Hydrazins oder Polyether, der OH- und Aminogruppe enthält, handelt.

**Claims**

1. Microcapsules of at least one core material and at least one wall which contains the reaction product of at least one isocyanate with at least one isocyanate-reactive group with an active H atom, characterized in that the isocyanate is an aromatic isocyanate which has at least two isocyanate groups and which additionally contains an alkyl or alkoxy group with at least 6 C atoms.

2. Microcapsules according to Claim 1, characterized in that the isocyanate corresponds to the following formula (I)

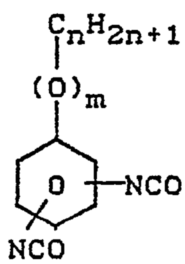

(I)

wherein

n denotes 6 to 20 and

m denotes 0 or 1,

and wherein the aromatic ring is unsubstituted.

3. Microcapsules according to Claim 1, characterized in that the isocyanate corresponds to one of the following formulare (II) or (III)

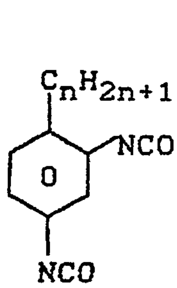

(II)

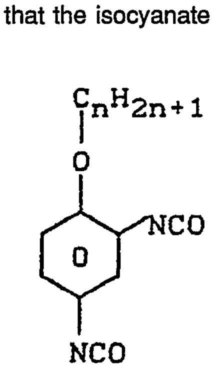

(III)

4. Microcapsules according to Claim 1, characterized in that the isocyanate-reactive group with an active H atom is an amine or alcohol.

5. Microcapsules according to Claim 1, characterized in that a dyestuff precursor is contained as the core material.

6. Reaction duplicating paper containing microcapsules according to Claim 1.

7. Process for the preparation of microcapsules, characterized in that an aromatic isocyanate which has at least two isocyanate groups and which additionally contains an alkyl or alkoxy group with at least 6 C atoms is dissolved in a hydrophobic liquid of low water-miscibility, this organic phase is emulsified in a continuous aqueous phase containing a protective colloid and if appropriate an emulsifier, and an aqueous polyamine solution in a stoichiometric amount to the aromatic isocyanate is added to this emulsion.

8. Process according to Claim 7, characterized in that the aromatic isocyanate is an isocyanate of the formula (I)

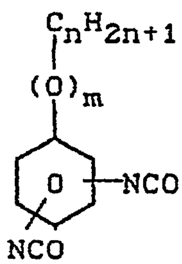

(I),

wherein

n denotes 6 to 20 and

m denotes 0 or 1,

and wherein the aromatic ring is unsubstituted, the hydrophobic liquid is an aliphatic or aromatic hydrocarbon, ether or ester or a dyestuff precursor from the group comprising triphenylmethane compounds, diphenylmethane compounds, xanthene compounds, thiazine compounds and spiropyran compounds, the protective colloid is carboxy-methylcellulose, gelatine or polyvinyl alcohol and the polyamine is an aliphatic primary or secondary di- or polyamine, hydrazine, a salt of hydrazine or a polyether containing OH and amino groups.

**Revendications**

1. Microcapsules consistant en au moins un matériau central et au moins une paroi contenant le produit réactionnel d'au moins un isocyanate avec au moins un groupe réactif vis-à-vis des isocyanates possédant un atome d'hydrogène actif, caractérisées en ce que l'isocyanate est un isocyanate aromatique avec au moins deux groupes isocyanates qui comporte en plus un groupe alkyle ou alcoxy avec au moins 6 atomes de carbone.

2. Microcapsules selon la revendication 1, caractérisées en ce que l'isocyanate répond à la formule suivante:

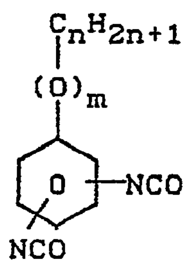

(I)

avec les signification suivantes:

n 6 à 20

m 0 ou 1

et où le cycle aromatique n'est pas substitué.

3. Microcapsules selon la revendication 1, caractérisées en ce que l'isocyanate répond à l'une des deux formules (II) ou (III) suivantes:

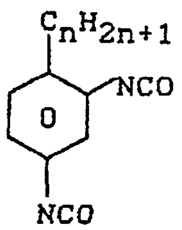

(II)

n = 6 - 18

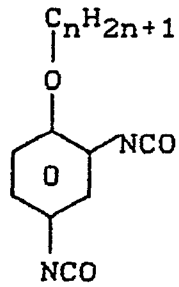

(III)

n = 8 - 20

4. Microcapsules selon la revendication 1, caractérisées en ce que le groupe réactif vis-à-vis des isocyanates comportant un atome d'hydrogène actif est une amine ou un alcool.

5. Microcapsules selon la revendication 1, caractérisées en ce qu'elles contiennet comme matériau central un précurseur de colorant.

6. Papier autocopiant réactif contenant des microcapsules selon la revendication 1.

7. Procédé pour la fabrication des microcapsules, caractérisé en ce que l'on dissout un isocyanate aromatique avec au moins deux groupes isocyanates qui comporte en plus un groupe alkyle au alcoxy avec au moins 6 atomes de carbone, dans un liquide hydrophobe peu miscible à l'eau, qu'on émulsifie cette phase organique dans une phase aqueuse continue contenant un colloïde protecteur et éventuellement un émulsifiant, et qu'on ajoute à cette émulsion une solution aqueuse de polyamine en quantité stoechiométrique par rapport à l'isocyanate aromatique.

8. Procédé selon la revendication 7, caractérisé en que l'isocyanate aromatique répond à la formule (I)

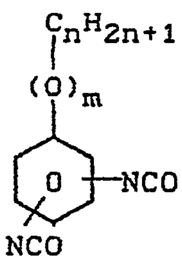

(I),

avec les signification suivantes:

n 6 à 20

m 0 ou 1

et où le cycle aromatique n'est pas substitué, le liquide hydrophobe est un hydrocarbure aliphatique ou aromatique, un éther, un ester ou un précurseur de colorant du groupe des composés de triphénylméthane, des composés de diphénylméthane, des composés du xanthène, des composés de thiazine et des composés de spiropyrane, le colloïde protecteur est la carboxyméthylcellulose, la gélatine ou l'alcool ce polyvinyle, et la polyamine une di- ou polyamine primaire ou secondaire aliphatique, l'hydrazine, un sel d'hydrazine ou un polyéther contenant des groupes -OH ou amino.